# EUROPÄISCHE PATENTSCHRIFT

(11) **EP 2 255 431 B1**
(45) Veröffentlichungstag und Bekanntmachung des Hinweises auf die Patenterteilung: **16.05.2012**
(21) Anmeldenummer: 09723499.1
(22) Anmeldetag: 13.03.2009
(51) Int. Cl.: H02K 21/24, H02K 16/00

(54) **TRÄGHEITSARMER DIREKTANTRIEB GROSSER LEISTUNGSDICHTE**
LOW-INERTIA DIRECT DRIVE HAVING HIGH POWER DENSITY
ENTRAÎNEMENT DIRECT À FAIBLE INERTIE ET PUISSANCE VOLUMIQUE ÉLEVÉE

(30) Priorität: 15.03.2008 DE 102008014556
(43) Veröffentlichungstag der Anmeldung: 01.12.2010
(73) Patentinhaber: Marquardt, Rainer, 85521 Riemerling (DE)
(72) Erfinder: Marquardt, Rainer, 85521 Riemerling (DE)
(74) Vertreter: Samson & Partner
(86) Internationale Anmeldenummer: PCT/EP2009/001854
(87) Internationale Veröffentlichungsnummer: WO 2009/115247

(56) Entgegenhaltungen:
- EP-A- 0 305 569
- DE-B3-102006 036 707
- JP-A- 2006 050 703

## Beschreibung

Die Erfindung betrifft elektrische Maschinen, die bei sehr geringem und kurzer, axialer Baulänge hohe spezifische Drehmomente ermöglichen, sowie hohe Anforderungen an die Gleichförmigkeit des Drehmomentes erfüllen. Sie sind vorzugsweise für eine leistungselektronische Speisung mit hoher Grundfrequenz vorgesehen und ermöglichen resultierend sehr hohe Leistungsdichten.

### Stand der Technik:

Entsprechend dem Stand der Technik wird die Forderung nach hohem spezifischem Drehmoment am besten von permanenterregten Maschinen erfüllt. Diese Antriebe sind entweder als polyphasige, permanenterregte Synchronmaschinen oder als Transversalflussmaschinen ausgeführt, da diese kleine Polteilungen und hohe Kraftdichten ermöglichen. Die erstgenannte Bauform ist u.a. aus DE 10 2004 045 939 ("Permanenterregte Synchronmaschine mit Unterdrückungsmitteln zur Verbesserung der Drehmomentwelligkeit") bekannt. Sie hat - u.a. die folgenden, wesentlichen Nachteile:
- Der Rotor benötigt zwecks Bildung eines magnetischen Rückschlusses erhebliche Mengen Weicheisenmaterial, die das Trägheitsmoment und das Gewicht erhöhen.
- Die Statorpole tragen jeweils einzelne Polspulen zur elektrischen Erregung. Dies führt bei den für hohe Kraftdichten notwendigen, hochpoligen Ausführungen zu hohem Wicklungsaufwand und hohen Kupferverlustleistungen im Stator.

Die zweitgenannte Bauform ist bezüglich dieses Punktes wesentlich günstiger, weil die Statorwicklung als einfache Ringwicklung ausgeführt werden kann und extrem hochpolige Ausführungen besser realisierbar sind.

Bauformen von Transversalflussmaschinen sind u.a. aus DE 101.10.719 ("Transversalflussmaschine mit mehreren einsträngigen Erregerteilen") und DE 198.48.123 ("Transversalflussmaschine mit Rotor-Sammler") bekannt.

Leider weisen diese Bauformen eine komplizierte, vielteilige Konstruktion und andere wesentliche Nachteile auf:
- Der Rotor benötigt zur Feldführung und Feldkonzentration ("Rotor-Sammler") erhebliche Mengen Weicheisenmaterial zusätzlich zu den Permanentmagneten, wodurch das Trägheitsmoment und das Gewicht ungünstigerweise zunehmen.
- Die Gleichförmigkeit der erzeugten Vortriebskraft ist unbefriedigend, so dass zwecks Verminderung von Drehmomentpulsationen eine hohe Strangzahl (i.a. größer 3) und/oder eine elektronische, rotorwinkelabhängige Steuerung der Strangströme notwendig wird. Beide Maßnahmen haben einen ungünstigen Einfluss auf den technischen Aufwand für die zugehörige Leistungselektronik und den erzielbaren Wirkungsgrad. Diesbezüglich wünschenswert ist eine Anordnung, die bereits prinzipbedingt pro Strang in einem sehr weiten Rotorwinkelbereich ein hohes, weitgehend konstantes Nutzmoment liefert, so dass auch zweiphasige (Strangzahl: 2) Ausführungen sinnvoll und aufwandsarm ermöglicht werden.
- Die einfach realisierbare Ringwicklung erzeugt ein störendes Streufeld, welches unerwünschte Verluste in benachbarten, metallischen Konstruktionsteilen hervorruft. Dies ist in beengten Einbausituationen ein schwerwiegendes Problem.

Um die Nachteile der Ringwicklung zu vermeiden, sind auch Transversalflussmaschinen mit verteilter Wicklung angegeben worden. Eine entsprechende Ausführung ist aus der Patentschrift DE 10 2004 .006.890 ("Mehrsträngige Transversalflussmaschine mit verteilter Wicklung") bekannt.

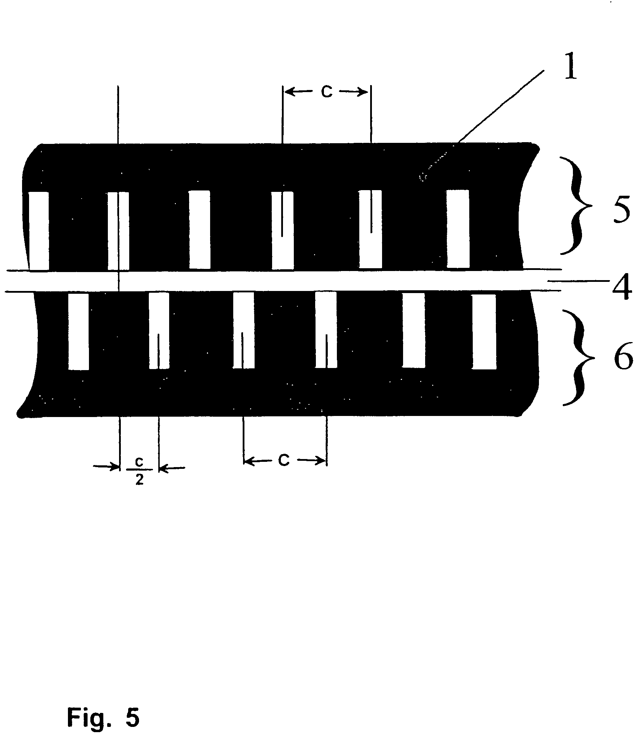

Die Polteilung der mehrsträngigen Wicklung lässt sich hier um ein Vielfaches größer als die durch die Permanentmagnete des Rotors vorgegebene Teilung wählen, so dass ein größerer Wicklungsquerschnitt - verglichen mit einer polyphasigen Synchronmaschine gleicher Polteilung - verfügbar ist. Nachteilig ist hingegen der hohe Aufwand für die zugehörige Leistungselektronik (siehe Fig. 5 in DE 10 2004 006 890), der sich in der Zahl der benötigten Wechselrichter und in hohen Anforderungen bezüglich deren Schaltfrequenz und Spannungsreserve zeigt. Die genannten Nachteile bzgl. mechanischer Konstruktion/Fertigung und des hohen Trägheitsmomentes des Rotors bleiben bestehen.

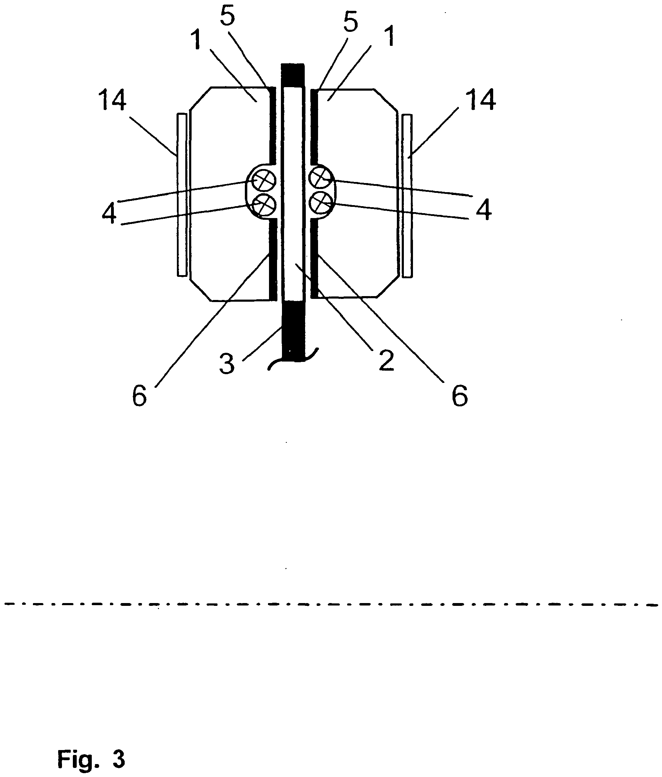

Aus DE 102 42 833 6 ("Elektrische Antriebsvorrichtung" und DE 102 006 036 707 ("Trägheitsarmer Direktantrieb") sind weitere Ausführungsformen von Transversalflussmaschinen bekannt. Beide weisen scheibenförmige - Permanentmagnete tragende - Rotoren auf, die kein zusätzliches Weicheisenmaterial enthalten. Dies ist bzgl. des Trägheitsmomentes vorteilhaft. Bei der erstgenannten Ausführung (DE 102 42833.6) ist jedoch eine sehr hohe Anzahl von Permanentmagneten - angeordnet in mindestens zwei (bzw. vier, siehe dort: Fig. 3) konzentrischen Ringen - erforderlich. Dadurch wird die Fertigung des Rotors erschwert und die mechanische Festigkeit erheblich beeinträchtigt. Letzteres betrifft insbesondere auch die wichtige Biegesteifigkeit, welche durch die Unterbrechungen zwischen den konzentrischen Ringen geschwächt wird. Der Rotor aus DE 10 2000 6036 707 ist im Vergleich nicht nur fertigungstechnisch einfacher, sondern auch wesentlich biegesteifer. Für einen scheibenförmigen Rotor geringer Dicke ist bekanntermaßen eine hohe Biegesteifigkeit von entscheidender Bedeutung.

Gemäß der Patentschrift DE 102 42833.6 umfasst der zugehörige Stator eine Vielzahl von U-förmigen Statorlamellen (34), die links und rechts der Rotorscheibe in Form von zylindrischen Ringen angeordnet sind. Der Hohlraum zwischen den Statorlamellen ist durch Stege aus nichtmagnetischem Material ausgefüllt, um einerseits eine stabilere Bauform zu erhalten und andererseits den magnetischen Fluss nicht zu beeinträchtigen. Diese Fügestellen zwischen den U-förmigen Statorlamellen und den Stegen sind jedoch bzgl. der Fertigung, der mechanischen Stabilität und der Dauerfestigkeit äußerst ungünstig - wie die Einsatzerfahrungen ähnlicher TransversalflussMaschinen zeigen.

Ein Ersatz der U-förmigen Statorlamellen (aus i.a. weichmagnetischem Eisenblech) gegen ähnliche Teile aus weichmagnetischem Pulververbundwerkstoff wäre selbstverständlich möglich - da prinzipiell bei allen elektrischen Maschinen diese Werkstoffe alternativ einsetzbar sind.

Weil weichmagnetische Pulververbundwerkstoffe jedoch eine wesentlich kleinere - mehr als eine Zehnerpotenz geringere - Permeabilität als Vollmetalle aufweisen, führt dies ohne weitere, erfinderische Maßnahmen zu erheblichen Nachteilen und Leistungseinbußen.

Diese Nachteile sind insbesondere:
- Eine erhebliche Drehmoment/Leistungseinbuße von typisch mind. 40 % .
- Eine wesentlich erhöhte Streuung und störende äußere Streufelder, die in benachbarten, metallischen Konstruktionsteilen unerwünschte Verluste verursachen.

Aus der EP 0 305 569 A1 ist eine Statoranordnung bekannt, die aus rundgebogenem Metallblech hergestellt ist und einen umlaufenden Ringspalt und einen Winkelversatz zwischen Statornuten aufweist.

Aufgabe der Erfindung ist es die genannten Nachteile zu vermeiden und einen verbesserten Direktantrieb anzugeben, dessen Leistungsdichte - trotz der Verwendung von Verbundwerkstoffen niedriger Permeabilität - angehoben ist.

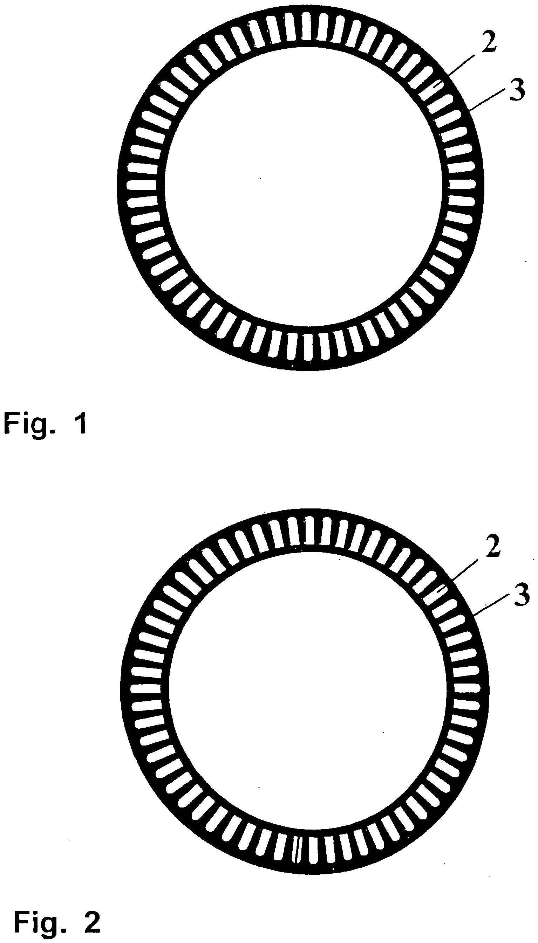

Ein weiteres Ziel der Erfindung ist es, die fertigungstechnisch und mechanisch vorteilhafte Rotorausführung aus DE 10 2006 036 707 einsetzen zu können (siehe Fig. 1). Die einreihige Anordnung der Permanentmagnete (2), sowie die resultierende geringe Anzahl und geringe Magnetmasse dieser Rotorausführung, soll sowohl für einphasige als auch für mehrphasige Maschinen einsetzbar werden.

Des weiteren wird die günstige Segmentierung der Permanentmagnete (2) in radialer Richtung ermöglicht, welche die Biegesteifigkeit der Rotorscheibe nicht beeinträchtigt. Dies ist in Fig. 2 beispielhaft für den unteren Permanentmagnet (2) dargestellt.

Ein zusätzliches Ziel der Erfindung ist es, den Stator bzgl. Fertigungsaufwand und mechanischer Stabilität und Dauerfestigkeit wesentlich zu verbessern. Auch die Verminderung der Anzahl der Statorwicklungen (4) und deren Anschlüssen ist zur Verminderung des Aufwandes vorteilhaft und anzustreben.

Gemäß der Erfindung werden die oben genannten Ziele dadurch erreicht, dass Rotor und Stator entsprechend Anspruch 1 und den weiteren Ansprüchen gestaltet wird. Zur näheren Erläuterung der Erfindung dienen die nachfolgenden Zeichnungen. Es stellen dar:
- Fig. 1:: Eine aus DE 10 2006 036 707 ("Trägheitsarmer Direktantrieb)"bekannte Rotorscheibe. Diese besteht aus einem Trägerring (3) aus amagnetischem Material - vorzugsweise faserverstärkter Kunststoff - mit Ausschnitten zum Einsetzen der Permanentmagnete (2). Weitere konstruktive Details und Ausführungsvarianten sind aus o.a. Patentschrift bekannt. Die Permanentmagnete (2) sind im Trägerring so orientiert, dass die Verbindungslinie ihrer magnetischen Nord- und Südpole in Umfangsrichtung zeigt und benachbarte Permanentmagnete (2) sich jeweils abstoßen. Auch dies ist aus o.a. Patentschrift bekannt.
- Fig. 2:: Eine aus o.a. Patentschrift (DE 10 2006 036 707) bekannte Rotorscheibe analog Fig. 1. Zur Veranschaulichung einer möglichen, vorteilhaften Segmentierungsrichtung der Permanentmagnete (2) ist beispielhaft ein unterer Permanentmagnet (2) entsprechend segmentiert dargestellt.

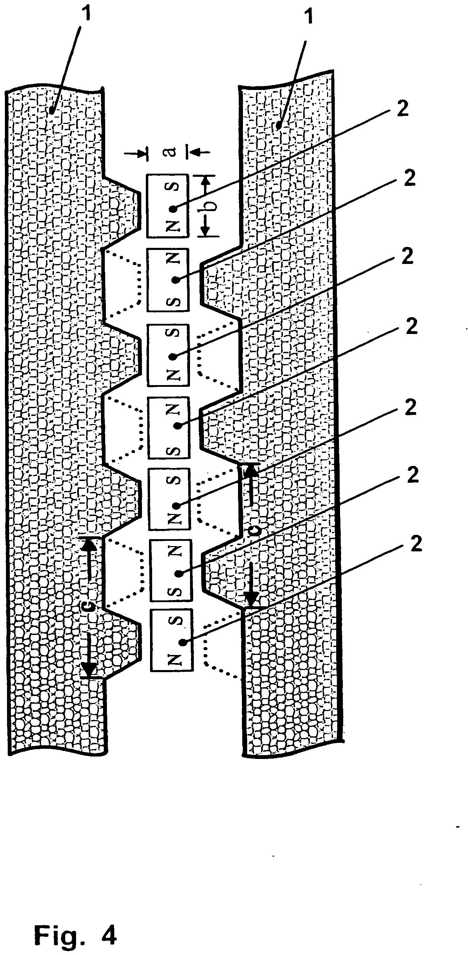

- Fig. 3:: Einen Schnitt durch den Außenbereich einer beispielhaften Ausführung eines Direktantriebes (Blickrichtung senkrecht zur Drehachse des Antriebes). Die Statorklötze (1) aus weichmagnetischem Verbundmaterial überstreichen vorzugsweise den vollen Umfang des Rotors, so dass sie die Form eines kreisförmigen Ringes aufweisen. Dies ist auch bzgl. der mechanischen Stabilität vorteilhaft. Die links- und rechtsseitigen Statorklötze (1) sind mechanisch zu verbinden, beispielsweise mittels eines zylindrischen Rohres aus amagnetischem Material. In umlaufenden, einseitigen Ringnuten der Statorklötze (1) liegen die Statorwicklungen (4). Diese können in bekannter Form als Ringwicklungen ausgeführt sein. Die Statorklötze (1) weisen einseitig radial genutete, äußere Grenzflächen (5) und innere Grenzflächen (6) auf. Diese Bereiche sind (in der bei Fig. 4 vorliegenden Blickrichtung) nicht direkt sichtbar und deshalb zwecks besserer Erkennbarkeit schwarz markiert. Das Teilungsmaß der Nutung ist an das des Rotors angepasst - wie im folgenden in Fig. 4 dargestellt. Die Nutungen der radial außen liegenden genuteten Grenzfläche (5) und die Nutungen der radial innen liegenden genuteten Grenzflächen (6) weisen erfindungsgemäß einen Winkelversatz von einem halben Teilungsmaß gegeneinander auf - entsprechend einer halben elektrischen Periode. Den gleichen Winkelversatz weisen auch die jeweils auf dem gleichen Radius liegenden linken Nutungen, gegen die rechten Nutungen auf. Des weiteren sind optionale Kurzschlussringe (14) in räumlicher Nähe der Statorklötze (1) vorgesehen. Diesbezüglich erfolgt die Erläuterung im Zusammenhang mit Fig. 4.
- Fig. 4: zeigt zwecks weiterer Erläuterung eine Ansicht mit Blickrichtung von außen (senkrecht zur mechanischen Drehachse) auf die Statorklötze (1) und die Permanentmagnete (2) des Rotors. Zur vereinfachten zeichnerischen Darstellung ist eine lineare Abwicklung gewählt worden, welche die kreisbogenförmige Krümmung vernachlässigt. Die mechanischen Teile des Rotors - wie u.a. der Trägerring (3)- sind übersichtshalber nicht dargestellt. Die Maßbezeichnungen bedeuten:

a: Ausdehnung der Permanentmagnete (2) in axialer Richtung
b: Dicke der Permanentmagnete (2) in Magnetisierungsrichtung
c: Teilungsmaß der Nutung der Statorklötze (1)

Das Teilungsmaß hat in der vereinfachten, linearen Darstellung von Fig. 4 die Dimension einer Länge. Ohne diese Vereinfachung, wäre die Angabe als Winkelmaß korrekt.

Mit durchgezogenen Linien dargestellt sind die äußeren genuteten Grenzflächen (5) der Statorklötze (1). Mit punktierten Linien dargestellt sind die inneren genuteten Grenzflächen (6) der Statorklötze (1). Diese Anordnung ermöglicht trotz des niedrigpermeablen Verbundmaterials der Statorklötze (1) eine wesentlich verminderte Streuung sowie eine nahezu vollständige Nutzung des Flusses der Permanentmagnete (2). Die erzielbaren Kraftdichten liegen bei gleichen radialen Maßen um mehr als ca. 40...50% über denen der bekannten Anordnung mit hochpermeablen U-förmigen Statorlamellen und der zugehörigen, komplizierten Rotorbauart mit mehreren, konzentrischen Magnetringen nach DE 102 42 8336.

Einen gewissen Nachteil anderer Art, der durch das weichmagnetische Verbundmaterial niedriger Permeabilität entsteht, stellt jedoch das starke, äußere Streufeld der Statorklötze (1) dar. Dieses lässt sich durch die Anordnung von Kurzschlussringen (14) aus elektrisch gut leitendem Material in Nähe der Statorklötze (1) abschwächen. Diese Kurzschlussringe (14) sind sehr unaufwändig und gut für die erfindungsgemäßen Direktantriebe anwendbar - insbesondere aus den folgenden Gründen:
- Die Kurzschlussringe (14) müssen nicht elektrisch angeschlossen und nicht zwingend gegen die Statorklötze (1) elektrisch isoliert werden.
- Die Kurzschlussringe (14) können - zwecks Minimierung der Stromwärmeverluste - platzsparend mit relativ großem Querschnitt ausgeführt werden.
- Die Kurzschlussringe (14) können hohl und im Inneren von Kühlmittel durchströmt ausgeführt werden, so dass sie über Wärmeleitung auch die benachbarten Statorklötze (1) kühlen.

Letztere Maßnahme ist hier besonders vorteilhaft realisierbar, da eine elektrische Isolierung gegen die Statorklötze (1) - welche die Wärmeleitung behindern würde - i.a. nicht erforderlich ist.

Bei hoher elektrischer Leitfähigkeit des Statormaterials kann es jedoch wünschenswert sein eine möglichst eindeutige Lokalisierung der induzierten Kreisströme im Material des Kurzschlussringes (14) zu erzwingen. Eine ausreichende Isolierung kann dann bereits durch eine Eloxierung der Aluminiumoberfläche der Kurzschlussringe (14) realisiert werden, falls diese aus Aluminium bestehen. Bei Einsatz von Kupfermaterialien ist beispielsweise eine dünne Isolierfolie zwischen den Statorklötzen (1) und den Kurzschlussringen (14) einsetzbar . Im allgemeinen sind bei Einsatz von Verbundmaterial für den Stator jedoch keine elektrischen Isolationen erforderlich.

Die o.a. Kühlmöglichkeiten sind u.a. deshalb vorteilhaft, weil eine direkte Flüssigkeitskühlung der Statorklötze - z. B. in bekannter Art mit durchgehenden Bohrungen - oftmals problematisch ist. Ein wesentlicher Grund für diese bekannte Problematik ist die Materialkorrosion der Statormaterialien bei direktem Kontakt mit den Kühlmitteln. Weitere Gründe liegen in der Schwächung der magnetischen Querschnitte durch Kühlkanäle bzw. Kühlbohrungen in den Statorklötzen (1).

Bezüglich der geometrischen Gestalt der Kurzschlussringe (14) bestehen viele Freiheitsgrade. Soll z. B. die axiale Länge des erfindungsgemäßen Direktantriebes minimiert werden, kann es vorteilhaft sein, diese in zwei konzentrische Kurzschlussringe aufzuteilen um in Axialrichtung im Bereich der Statorwicklung (4) den Platz weitgehendst für das Statormaterial zu nutzen.

Des weiteren ergibt sich aus der Funktion der Kurzschlussringe für den Durchschnittsfachmann, dass selbstverständlich eine beliebige Serien- und/oder Parallelschaltung mehrerer Kurzschlussringe einsetzbar ist.
- Fig. 5: zeigt zwecks weiterer Erläuterung eine Ansicht auf die genuteten Grenzflächen (5) und (6) der Statorklötze (1) mit Blickrichtung parallel zur Drehachse des Direktantriebes. Zur Vereinfachung der zeichnerischen Darstellung ist nur ein kleiner Ausschnitt gezeigt und wiederum die Krümmung vernachlässigt (lineare Abwicklung). Die in der Zeichenebene tiefer liegenden Bereiche - d.h.: die genuteten Bereiche - sind schwarz, die höher liegenden Bereiche der Grenzflächen (5) und (6) sind weiß dargestellt. Die weißen Bereiche können hier sinngemäß als Polflächen bezeichnet werden. Mittig ist zusätzlich der Bereich mit der Statorwicklung (4) eingezeichnet. Die zeichnerische Darstellung nach Fig. 5 ist nicht maßstäblich in dem Sinne, dass die geometrischen Proportionen optimiert wären. Fig. 5 dient nur zur zusätzlichen Erläuterung von Fig. 4 und soll insbesondere den bereits erläuterten Versatz zwischen den Nutungen der äußeren Grenzflächen (5) und der inneren Grenzflächen (6) nochmals in einer weiteren Blickrichtung zeigen.

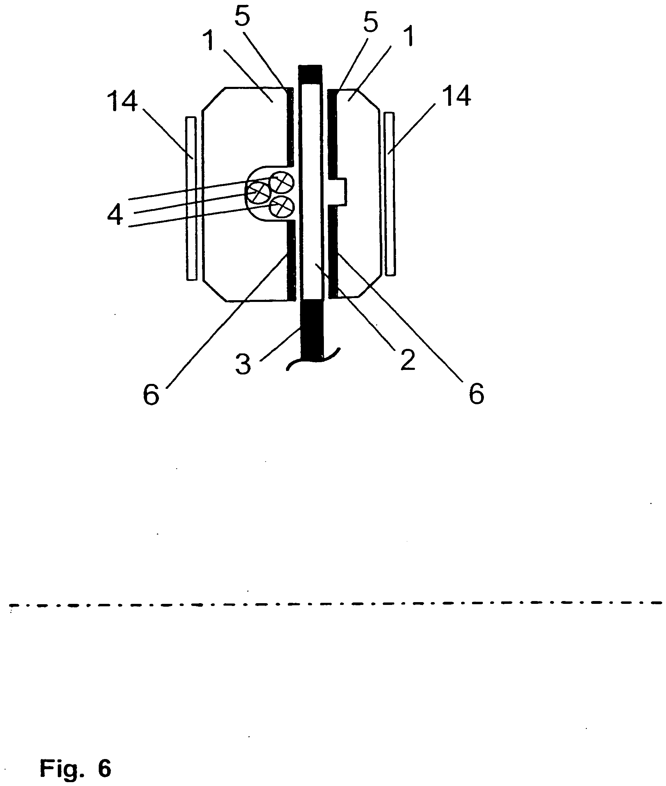

- Fig. 6: zeigt eine weitere Anordnung ähnlich Fig. 3. Im Unterschied zu Fig. 3 befinden sind die Statorwicklungen (4) nur in einem der beiden Statorklötze (1). Diese Maßnahme ist bei erfindungsgemäßen Direktantrieben insbesondere aufgrund des optimierten, magnetischen Kreises und der extrem geringen Streuung sinnvoll möglich. Es treten resultierend keine nennenswerten Drehmomenteinbußen auf, wenn die Statorwicklung (4) dergestalt unsymmetrisch ausgeführt wird. Als vorteilhaft resultieren u.a. eine vereinfachte Fertigung, eine verminderte Anzahl elektrischer Anschlüsse und eine bessere Zugänglichkeit der elektrischen Anschlüsse der Statorwicklung (4). Letztere Problematik ist bei beengten Einbauverhältnissen oftmals von Bedeutung. Auch die, bei allen erfindungsgemäßen Direktantrieben vorteilhafte Ausführung der Statorwicklungen als Hohlleiter mit Innenkühlung, wird erleichtert. In Fig. 6 zusätzlich angedeutet, ist die Tatsache, dass sich die Abmessungen der Statorklötze (1) und der Ringnuten sowie die Windungszahl der Statorwicklungen für diesen Fall variieren und optimieren lassen, so dass die Anordnung nach Fig. 6 bezüglich Drehmoment, Leistung und Wirkungsgrad der Anordnung nach Fig. 3 ebenbürtig oder überlegen ist. Die günstige Möglichkeit, die wicklungslose Ringnut im rechten Statorklotz von Fig. 6 sinnvoll reduzieren zu können, resultiert im wesentlichen ebenfalls aus der erfindungsgemäßen, sehr streuungsarmen Grundanordnung nach Anspruch 1.

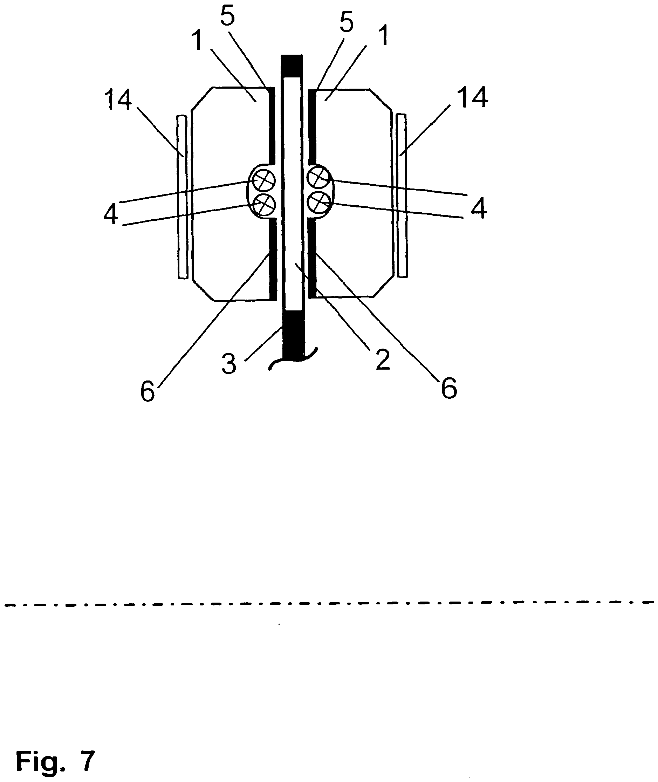

- Fig. 7: zeigt eine Anordnung nach Fig. 6, die sich im wesentlichen durch radial verlängerte Permanentmagnete (2) unterscheidet. Diese Maßnahme ermöglicht es bei gleichem Gewicht der Statorklötze (1) Drehmoment und Leistung weiter zu steigern. Das Rotorgewicht ist bei den erfindungsgemäßen Direktantrieben i.a. mehr als eine Zehnerpotenz unter dem Statorgewicht, so dass die geringe Zunahme der Masse der Permanentmagnete (2) unwesentlich ist. Des weiteren enthalten die erfindungsgemäßen Direktantriebe - bezogen auf Drehmoment und Leistung - vergleichsweise äußerst geringe Mengen an Magnetmaterial, so dass auch die Zunahme der Kosten unwesentlich ist.

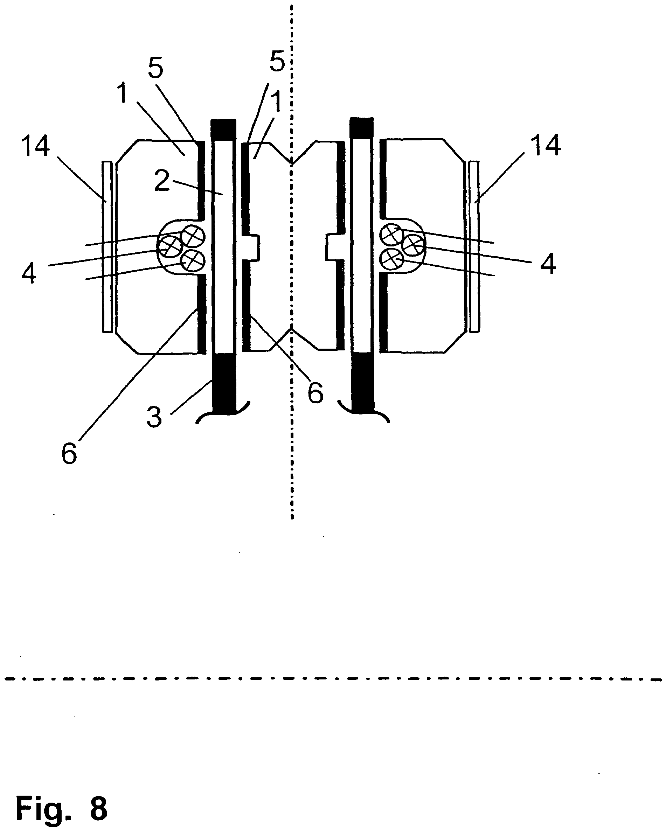

- Fig. 8: zeigt als Ausführungsbeispiel der Erfindung zweiphasigen Direktantrieb, der - bei Speisung mit zwei um 90° elektrisch phasenverschobenen Statorströmen - bereits höchste Anforderungen an die Konstanz des Drehmoments erfüllen kann. Er lässt sich aus zwei Anordnungen nach Fig. 6 entstanden denken. Die dreieckförmigen Einkerbungen im mittleren, wicklungslosen Statorklotz (1) können auch tiefer ausgeführt sein, um den linken und rechten magnetischen Kreis bestmöglich zu entkoppeln. Auch eine völlige, mechanische Trennung des Statorklotzes an der strichpunktierten Symmetrielinie ist möglich.

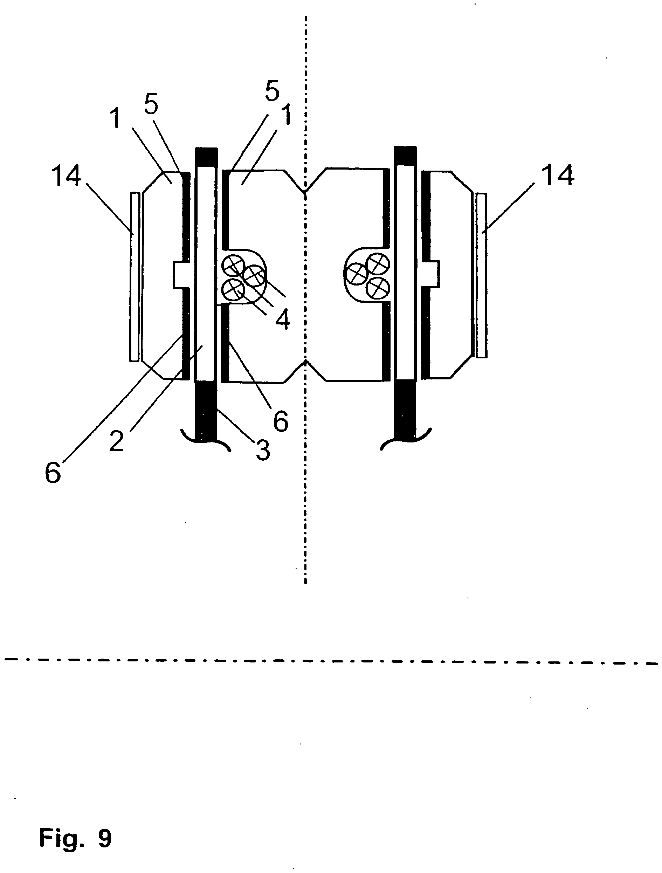

- Fig. 9: zeigt einer erfindungsgemäße Anordnung analog Fig. 8. Im Unterschied zu Fig. 8 sind die Statorklötze (1) spiegelverkehrt angeordnet. Selbiges hat den Vorteil, dass sich die zwei Statorwicklungen (4) der zwei elektrischen Phasen in einem gemeinsamen Statorklotz (1) befinden. Diese Tatsache kann - j e nach Anwendung - fertigungstechnisch, mechanisch oder anschlusstechnisch vorteilhaft sein.

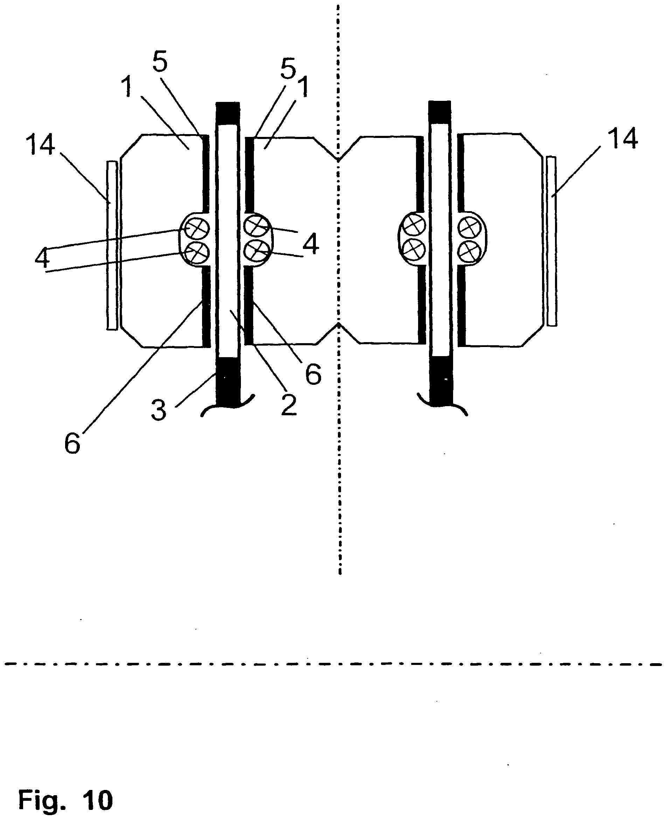

- Fig. 10: zeigt der Vollständigkeit halber, eine erfindungsgemäße zweiphasige Anordnung,welche aus zwei Anordnungen nach Fig. 3 gebildet wird. Im allgemeinen ist sie - aufgrund der hohen Anzahl von elektrischen Anschlüssen - weniger vorteilhaft.

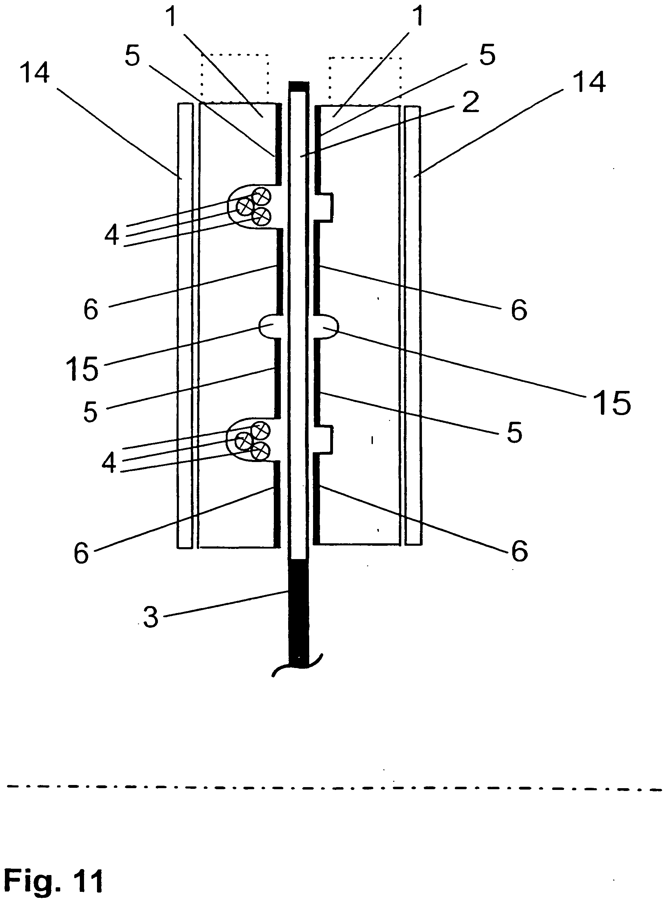

- Fig. 11: zeigt eine weitere Anordnung für einen mehrphasigen Direktantrieb. Diese eignet sich vorzugsweise für Direktantriebe mit sehr großen Durchmessern. In diesen Fällen ist es möglich und sinnvoll zwei oder mehrere Statoren der erfindungsgemäßen Direktantriebe konzentrisch ineinander zu setzen. Die Statorklötze (1) können mechanisch verbunden und einteilig bleiben, wenn die elektrischen Phasen durch radial umlaufende Trennnuten (15) magnetisch entkoppelt werden. Soll der entstandene zweiphasige Antrieb (Fig. 11) ein mittleres Antriebsmoment gleicher Größe wie die ursprüngliche Anordnung (Fig. 3) erbringen, ist grundsätzlich die gleiche Rotorscheibe mit den gleichen Abmessungen der Permanentmagnete (2) einsetzbar. Die Darstellung (Fig. 11) ist in diesem Sinne nicht maßstäblich - bzw. stellt eine Ausführung mit höherem Drehmoment dar. Geringfügige Unterschiede des Drehmomentes zwischen der radial äußeren und inneren Phase sind bei großen Durchmessern der Anordnung vernachlässigbar, wenn die radialen Ausdehnungen der Statorklötze (1) klein gegen den Durchmesser gewählt werden. Diese Voraussetzung wird aus Gründen der Gewichtsminimierung im allgemeinen erfüllt sein - bzw. angestrebt werden. Verleibende, geringfügige Unterschiede der Drehmomente lassen sich auch durch kleine maßliche Anpassungen der radialen Nutungen (5 und 6) ausgleichen.

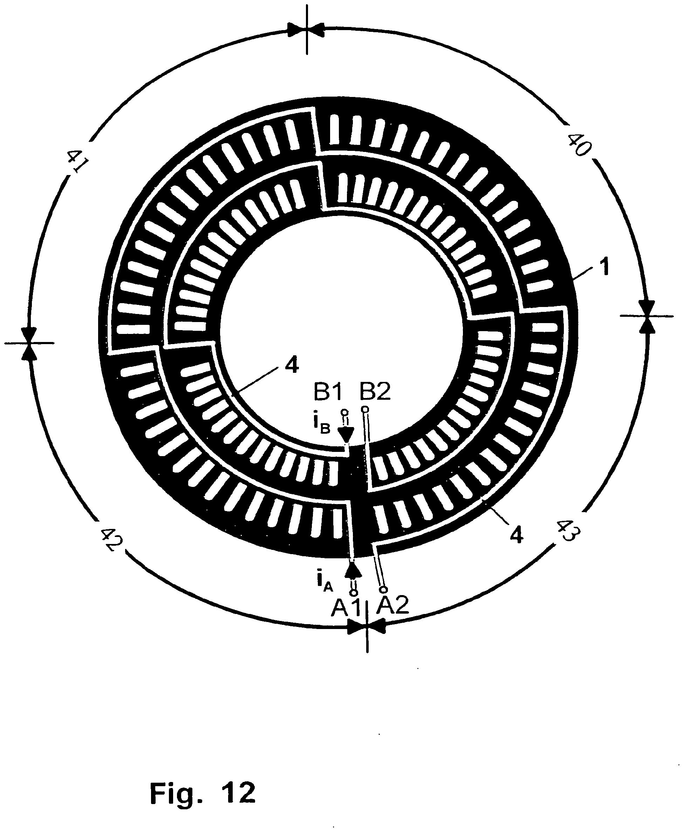

- Fig. 12: zeigt eine weitere Maßnahme um mehrphasige Antriebe zu ermöglichen, die nur eine Rotorscheibe benötigen. Auch hier kann die einfach zu fertigende Rotorscheibe konstruktiv und maßlich unverändert eingesetzt werden, wie bei Fig. 11 bereits erläutert. Bei dieser Maßnahme werden die genuteten Bereiche (5) und (6) der Statorklötze (1) in mehrere Sektoren aufgeteilt. In Fig. 12 ist dies prinzipiell am Beispiel eines zweiphasigen Antriebes dargestellt. Es sind Statorwicklungen (4) für die Bestromung der ersten Phase mit den Anschlüssen A1 und A2 sowie Statorwicklungen für die Bestromung der zweiten Phase mit den Anschlüssen B 1 und B2 vorgesehen. Die zugehörigen Ströme (i_{A}) und (i_{B}) sollen eine Phasenverschiebung von 90° gegeneinander aufweisen, wie dies für zweiphasige Antriebe bekanntlich angezeigt ist. Der ersten elektrischen Phase sind hier die Sektoren (42) und (40) zugeordnet. Der zweiten elektrischen Phase sind die Sektoren (41) und (43) zugeordnet. Die radial genuteten Grenzflächen (5) und (6) weisen bei letzteren Sektoren ((41) und (43)) einen Winkelversatz der Nutungen von einer Viertelteilung (c/4) gegen die der erstgenannten Sektoren auf. Zwischen den Sektoren lassen sich - unter Verlust einiger, weniger Polflächen - breitere radiale Nuten einfiigen, die zusätzlich das radiale Herausführen der Statorwicklungen (4) zu den äußeren Anschlüssen erleichtern. Mittels der beschriebenen Maßnahmen können sowohl die Rotorscheibe (10) als auch die Statorklötze (1) fertigungstechnisch einfach bleiben. Insbesondere müssen sie mechanisch nicht zerteilt werden, was auch die Festigkeit und Montierbarkeit beeinträchtigen würde. Geringfügig aufwändiger ist nur die Ausführung der Statorwicklungen: In den jeweils von der betreffenden elektrischen Phase ungenutzten Sektoren müssen die Statorwicklungen (4) räumlich außerhalb der eigentlichen Ringnut geführt werden.

Dies ist in Fig. 12 nur durch radiales Verschieben der Statorwicklungen (4) in der Zeichenebene darstellbar. Bei den erfindungsgemäßen Antrieben ist es vorteilhaft möglich, die Statorwicklungen (4) in diesen Sektorbereichen an der luftspaltabgewandten Seite der Statorklötze (1) - z. B.: in den abgeschrägten Ecken in Nähe der Kurzschlussringe (14) - zu führen. Der Raumbedarf ist hier nicht weiter störend.

Als nennenswerter Nachteil eines mehrphasigen Antriebes mit dieser beschriebenen sektorförmigen Aufteilung verbleibt demnach einzig die erhöhte Länge der Statorwicklungen (4). Ausführungen mit drei oder mehr elektrischen Phasen und einer größeren Anzahl von Sektoren sind sinngemäß ebenfalls möglich.

## Patentansprüche

1. Direktantrieb axial kurzer Baulänge mit eisenlosen, scheibenförmigen Rotoren, welche in einem konzentrischen Kreis einreihig angeordnete Permanentmagnete (2) tragen, wobei die Statoren aus zwei oder mehreren, aus weichmagnetischem Verbundwerkstoff gefertigten, Statorklötzen (1) bestehen, die beidseitig der Rotorscheiben angeordnet sind,
**dadurch gekennzeichnet, dass** die Statorklötze (1) die Form von Kreisringen mit radial aussen liegenden genuteten bzw. radial innen liegenden genuteten Grenzflächen (5) bzw. (6) aufweisen, welche gegeneinander bezüglich der Nutteilung um ein halbes Teilungsmass winkelversetzt und durch eine umlaufende Ringnut getrennt sind.

2. Direktantrieb nach Anspruch 1, wobei die scheibenförmigen Rotoren jeweils mit - in einem konzentrischen Kreis einreihig angeordneten - Permanentmagneten (2) bestückte Trägerringe (3) aus amagnetischem Material aufweisen, deren Permanentmagnete (2) in jedem der Trägerringe (3) so orientiert sind, dass die Verbindungslinie ihrer magnetischen Nord- und Südpole in Umfangsrichtung zeigt und benachbarte Permanentmagnete (2) sich abstoßen.

3. Direktantrieb nach einem der vorhergehenden Ansprüche, wobei die Permanentmagnete (2) in radialer Richtung Trennfugen aufweisen oder vollständig in einzelne Teilmagnete aufgeteilt sind.

4. Direktantrieb nach einem der vorhergehenden Ansprüche, wobei die Statorwicklungen (4) in den umlaufenden Ringnuten der Statorklötze (1) nur einseitig der Rotorscheiben bestückt sind.

5. Direktantrieb nach einem der vorhergehenden Ansprüche, wobei die umlaufende Ringnut in den wicklungslosen Statorklötzen (1) in der radialen und/oder axialen Ausdehnung kleiner als in den wicklungsbestückten Statorklötzen (1) bemessen ist.

6. Direktantrieb nach einem der vorhergehenden Ansprüche, wobei die rotorabgewandten Seiten der Statorklötze mit Kurzschlussringen (14) aus elektrisch leitendem Material bestückt sind, welche optional zusätzlich in ihrem Inneren von flüssigen Kühlmitteln durchströmt werden.

7. Direktantrieb nach einem der vorhergehenden Ansprüche, wobei die Permanentmagnete (2) der Rotoren radial innen und/oder außen in ihrer Ausdehnung die Maße der genuteten Grenzflächen (5) und (6) der Statorklötze (1) überragen.

8. Direktantrieb nach einem der vorhergehenden Ansprüche, wobei die Statorklötze (1) zwischen zwei oder mehreren Rotorscheiben paarweise mechanisch zu einem Teil zusammengefasst sind.

9. Direktantrieb nach einem der vorhergehenden Anspruche, wobei die Statorklötze (1) zwei oder mehrere innere und äußere Grenzflächen (5) und (6) aufweisen, die, konzentrisch angeordnet, durch eine umlaufende Trennnut (15) oder mechanisch vollständig getrennt sind.

10. Direktantrieb nach einem der vorhergehenden Ansprüche, wobei die radial genuteten Grenzflächen (5) und (6) der Statorklötze (1) sektorartig aufgeteilt sind und die Nutungen in einem oder mehreren dieser Sektoren einen Winkelversatz gegeneinander aufweisen.

## Claims

1. A direct drive of axially short structural length with non-ferrous rotors in the form of discs which carry permanent magnets (2) arranged in a single row in a concentric circle, wherein the stators comprise two or more stator blocks (1) which are produced from soft magnetic composite material and which are arranged on both sides of the rotor discs, **characterized in that** the stator blocks (1) are in the form of circular rings with grooved boundary faces (5) situated radially on the outside and grooved boundary faces (6) situated radially on the inside respectively, which are offset at an angle from each other by a half distribution dimension with respect to the groove distribution and are separated by a continuous annular groove.

2. A direct drive according to claim 1, wherein the disc-shaped rotors have in each case carrier rings (3) of amagnetic material which are equipped with permanent magnets (2) - arranged in a single row in a concentric circle - and the permanent magnets (2) of which are orientated in each of the carrier rings (3) in such a way that the connecting line of their magnetic north and south poles points in the peripheral direction and adjacent permanent magnets (2) repel each other.

3. A direct drive according to one of the preceding claims, wherein the permanent magnets (2) have separating joints in the radial direction or are divided completely into individual magnet parts.

4. A direct drive according to any one of the preceding claims, wherein the stator coils (4) in the continuous annular grooves of the stator blocks (1) are equipped only on one side of the rotor discs.

5. A direct drive according to any one of the preceding claims, wherein the continuous annular groove in the stator blocks (1) without coils has a smaller dimension in the radial and/or axial extension than in the stator blocks (1) equipped with coils.

6. A direct drive according to any one of the preceding claims, wherein the sides of the stator blocks (1) facing away from the rotor are equipped with short circuit rings (14) of electrically conductive material through the interior of which liquid coolants additionally optionally flow.

7. A direct drive according to any one of the preceding claims, wherein the permanent magnets (2) of the rotors project radially inwards and/or outwards in their extension beyond the dimensions of the grooved boundary faces (5) and (6) of the stator blocks (1).

8. A direct drive according to any one of the preceding claims, wherein the stator blocks (1) between two or more rotor discs are grouped mechanically in pairs to form one part.

9. A direct drive according to any one of the preceding claims, wherein the stator blocks (1) have two or more inner and outer boundary faces (5) and (6) which, arranged concentrically, are completely separated by a continuous separating groove (15) or in a mechanical manner.

10. A direct drive according to any one of the preceding claims, wherein the radially grooved boundary faces (5) and (6) of the stator blocks (1) are divided in the manner of sectors and the groove patterns in one or more of these sectors have an angular offset from one another.

## Revendications

1. Entraînement direct de faible longueur axiale, avec des rotors exempts non ferreux en forme de disque, lesquels supportent des aimants permanents (2) disposés en une seule rangée sur un cercle concentrique, les stators étant composés de deux ou de plusieurs blocs de stator (1) en matériau composite magnétique doux, disposés sur les deux faces des disques de rotor, **caractérisé en ce que** les blocs de stator (1) ont la forme de couronnes toriques avec des surfaces de délimitation (5) à rainure disposées radialement vers l'extérieur, et des surfaces de délimitation (6) à rainure disposées radialement vers l'intérieur, lesquelles sont angulairement décalées entre elles d'un demi-pas par rapport à la division de rainure et séparées par une rainure annulaire périphérique.

2. Entraînement direct selon la revendication 1, où les rotors en forme de disque comportent chacun des bagues de support (3) en matériau magnétique pourvues d'aimants permanents (2) - disposés en une seule rangée sur un cercle concentrique, et dont les aimants permanents (2) sont orientés dans chacune des bagues de support (3) de telle manière que la ligne de connexion de leurs pôles magnétiques nord et sud est dirigée vers la périphérie et que des aimants permanents (2) voisins se repoussent.

3. Entraînement direct selon l'une des revendications précédentes, où les aimants permanents (2) comportent des joints de séparation en direction radiale ou sont complètement divisés en différents aimants partiels.

4. Entraînement direct selon l'une des revendications précédentes, où les enroulements de stator (4) dans les rainures annulaires périphériques des blocs de stator (1) n'équipent qu'une seule face des disques de rotor.

5. Entraînement direct selon l'une des revendications précédentes, où la rainure annulaire périphérique dans les blocs de stator (1) sans enroulement est prévue avec une extension radiale et/ou axiale inférieure à celle dans les blocs de stator (1) pourvus d'enroulements.

6. Entraînement direct selon l'une des revendications précédentes, où les faces des blocs de stator distantes du rotor sont pourvues de bagues court-circuitées (14) en matériau conducteur électrique, lesquelles sont en option également traversées par des réfrigérants liquides à l'intérieur.

7. Entraînement direct selon l'une des revendications précédentes, où l'extension des aimants permanents (2) des rotors dépasse radialement à l'intérieur et/ou à l'extérieur l'extension des surfaces de délimitation (5) et (6) à rainure des blocs de stator (1).

8. Entraînement direct selon l'une des revendications précédentes, où les blocs de stator (1) sont regroupés mécaniquement par paire pour former une seule pièce entre deux ou plusieurs disques de rotor.

9. Entraînement direct selon l'une des revendications précédentes, où les blocs de stator (1) comportent deux ou plusieurs surface de délimitation (5) et (6) intérieures et extérieures, disposées concentriquement, lesquelles sont complètement séparées par une rainure de séparation (15) périphérique, ou mécaniquement.

10. Entraînement direct selon l'une des revendications précédentes, où les surfaces de délimitation (5) et (6) à rainure radiale des blocs de stator (1) sont divisées par secteurs et où les rainures présentent un décalage angulaire entre elles dans un ou plusieurs desdits secteurs.
